# EUROPEAN PATENT APPLICATION

(11) **EP 1 215 036 A1**
(43) Date of publication of application: **19.06.2002**
(21) Application number: 01310407.0
(22) Date of filing: 13.12.2001
(51) Int. Cl.: B32B 3/12, B32B 5/18, B29D 28/00, B29C 55/06

(54) **Foamed laminate sheet and method and apparatus for producing the foamed laminate sheet**

(30) Priority: 13.12.2000 JP 2000379048
(71) Applicant: HONDA GIKEN KOGYO KABUSHIKI KAISHA, Minato-ku Tokyo (JP)
(72) Inventor: Kiyohara, Nobuyoshi c/o Honda Giken Kogyo K.K., Minato-Ku, Tokyo (JP); Koyama, Tatsua c/o Honda Giken Kogyo K.K., Minato-Ku, Tokyo (JP)
(74) Representative: Piésold, Alexander J.

(57) **Abstract**

A foamed laminate sheet 30, method and apparatus for making the foamed laminate sheet 30, wherein a synthetic resin sheet 31 is formed with cuts 33 intermittently and staggeredly extending in a vertical direction and/or in a lateral direction. The synthetic resin sheet 31 with cuts 33 is extended, under tension, into a meshed sheet 32. Then, the meshed sheet 32 may be attached to a foamed sheet 12, to thereby produce the foamed laminate sheet 30. In one embodiment, the extension of the synthetic resin sheet is performed by winding the synthetic resin sheet 31 with cuts 33 over a crown-shaped roller 51.

## Description

The present invention relates to a foamed laminate sheet, and a method and apparatus used for producing the foamed laminate sheet. The foamed laminate sheet of the present invention may be used, for example, as a packaging material for products such as automotive parts.

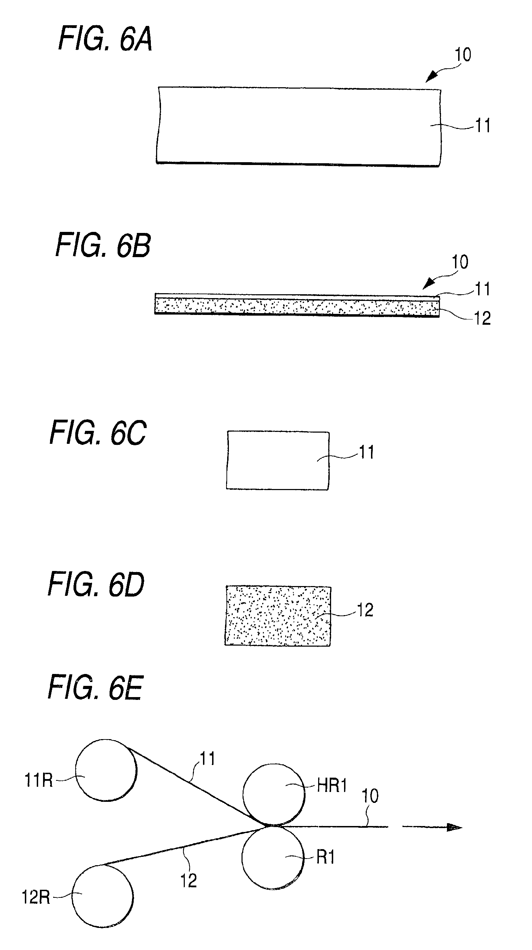

Conventionally, there is known a foamed laminate sheet used as a packaging material for a product and a method for producing the conventional laminate sheet as shown in Figs. 6A to 7F. A foamed laminate sheet 10 shown in Figs. 6A and 6B includes a synthetic resin sheet (film) 11 (see Fig. 6C) and a foamed sheet 12 attached to the synthetic resin sheet 11 (see Fig. 6D)

As shown in Fig. 6E, the synthetic resin sheet 11 and the foamed sheet 12 are thermally adhered to each other while passing between a heat roller HR1 and a pressure roller R1, to thereby produce the foamed laminate sheet 10. The reference character 11R in Fig. 6E designates a roll of the synthetic resin sheet 11, and 12R designates a roll of the foamed sheet 12.

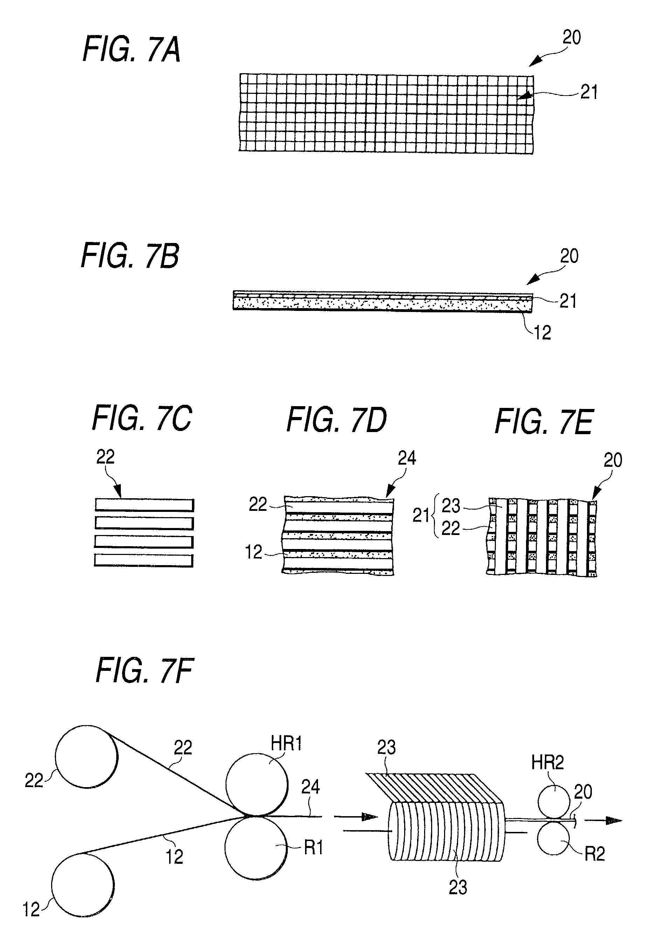

A second conventional foamed laminate sheet 20 is shown in Figs. 7A and 7B and includes a latticed synthetic resin sheet 21 (see Fig. 7E) and the foamed sheet 12 attached to the latticed synthetic resin sheet 21 (see Fig. 7D). The foamed laminate sheet 20 is produced as follows. At first, as shown in Figs. 7C and 7F, plural pieces of synthetic resin tape 22 and the foamed sheet 12 are thermally adhered to each other while passing between the first heat roller HR1 and the pressure roller R1, so as to obtain an intermediate sheet 24. Subsequently, synthetic resin tapes 23 being the same as the synthetic resin tapes 22, but perpendicularly crossing with the synthetic resin tapes 22, are attached to the intermediate sheet 24, and then thermally adhered thereto while passing between a second heat roller HR2 and a pressure roller R2.

The conventional foamed laminate sheet 10 shown in Figs. 6A and 6B is easily produced and obtained at low cost. However, since sheet 10 has a structure formed by merely adhering the synthetic resin sheet 11 to the foamed sheet 12, there are drawbacks in that there is no air permeability of the sheet 10 and also, sheet 10 formed by this method may easily fracture. Further, because there is no air permeability, a gas generated from a plasticizer of a packed product may fill the interior of the package, contributing to discolouring of a luster on the surface of painted products.

While the foamed laminate sheet 20 shown in Figs. 7A and 7B may be air permeable and better at preventing fracture, sheet 20 is both complicated and costly to produce.

It is an object of at least the preferred embodiments of the invention to solve the problems mentioned above, and provide a foamed laminate sheet that has air permeability and excellent proof against the development of fracture (hereinafter referred to as "development-proof") as well as a method and apparatus for producing the sheet that allows for obtaining low production costs.

According to a first aspect of the invention, there is provided a foamed laminate sheet, including a meshed sheet made of synthetic resin. The meshed sheet may be obtained by extending a synthetic resin sheet including cuts made intermittently in a substantially vertical direction and/or a substantially lateral direction. A foamed sheet is then attached to the meshed sheet. Therefore, this sheet has air permeability and excellent development-proof.

The meshed sheet may be produced by extending the synthetic resin sheet formed with intermittent cuts in a substantially vertical direction and/or a substantially lateral direction, and therefore, it is unnecessary to cross plural pieces of synthetic resin tapes 22, 23 with each other as in the prior art shown in Figs. 7A to 7F. Thus, the production process is simplified, which consequently lowers the cost of production. As such, according to the foamed laminate sheet of the first aspect of the invention, packaging materials having air permeability and excellent development-proof may be obtained at low cost.

According to a second aspect of the invention, there is provided a method of producing a foamed laminate sheet. The method may include the steps of forming cuts on a synthetic resin sheet that intermittently extend in a substantially vertical direction and/or a substantially lateral direction, extending the synthetic resin sheet with the cuts, to thereby form a meshed sheet, and attaching a foamed sheet to the meshed sheet so as to produce the foamed laminate sheet. Accordingly, the foamed laminate sheet having air permeability and excellent development-proof may be produced at a low cost.

Further, according to a preferred feature of the invention, in the foamed laminate sheet of the first aspect or the method of the second aspect, the cuts are formed in a staggered pattern. With this structure, the development-proof is improved.

Moreover, according to another preferred feature of the invention, in the method of the second aspect, the extending step is performed by winding the synthetic resin sheet over a crown-shaped roller. With this method, the meshed sheet is suitably and easily obtained, and as a result, the foamed laminate sheet may be produced at a further low cost.

Certain preferred embodiments of the invention will now be described by way of example and with reference to the accompanying drawings, in which:
Fig. 1A is a partial plan view of a foamed laminate sheet according to an embodiment of the invention,
Fig. 1B is a cross sectional view of the foamed laminate sheet,
Fig. 1C is a partial plan view of a synthetic resin sheet with cuts,
Fig. 1D is a partial plan view of an expanded meshed sheet, and
Fig. 1E is a front view showing the production process for forming the foamed laminate sheet;
Fig. 2 is a schematically perspective view showing a cutting part used in a method of the invention;
Fig. 3A is a schematically perspective view of an extending part used in a method of the invention;
Fig. 3B is a partially enlarged plan view of a synthetic resin sheet with cuts;
Fig. 3C is a partially enlarged plan view of a meshed sheet according to an embodiment of the invention;
Fig. 4A is a partial plan view of a synthetic resin sheet with cuts,
Fig. 4B is a perspective view of a production process according to a method of the invention, and
Fig. 4C is a partial plan view of an expanded meshed sheet;
Fig. 5A is a partial plan view of a synthetic resin sheet with cuts,
Fig. 5B is a partial plan view of a crown-shaped roller,
Fig. 5C is a cross sectional view taken along the lines C-C of Fig. 5B;
Figs. 6A to 6E are schematic views explaining a conventional foamed laminate sheet and a method for producing the conventional foamed laminate sheet; and
Figs. 7A to 7F are schematic views explaining another conventional foamed laminate sheet and a method for producing the conventional foamed laminate sheet.

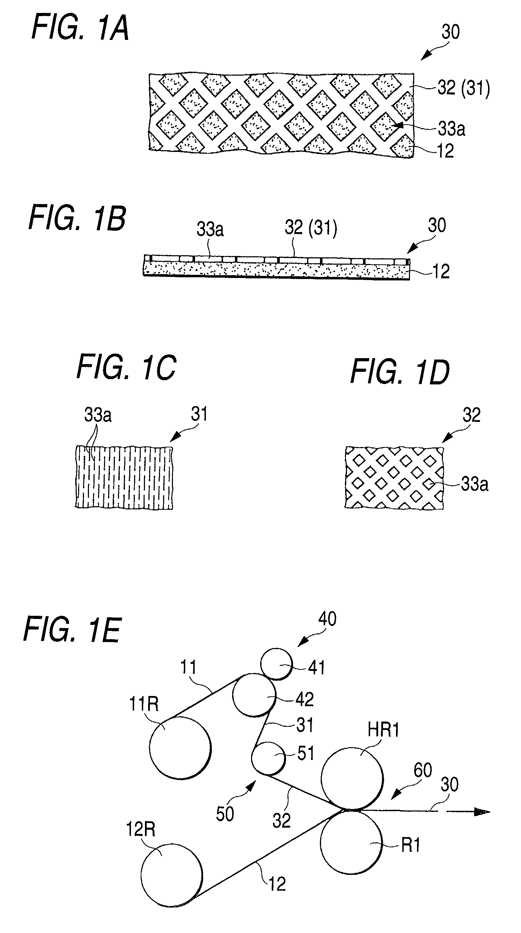

Figs. 1A to 1E are schematic views showing a foamed laminate sheet and a method for producing the foamed laminate sheet according to a first embodiment of the invention. For better understanding, Figs. 1A to 1E use the same numerals as Figs. 6A to 6E to refer to the same parts.

As shown in Figs. 1A and 1B, a foamed laminate sheet 30 according to a first embodiment of the invention includes a meshed sheet 32 (see Fig. 1D) and a foamed sheet 12 attached to the meshed sheet 32. The meshed sheet 32 is, as described in detail later, structured by expanding a synthetic resin sheet 31 with cuts 33a (see Fig. 1C) intermittently formed in the vertical direction. As a representative of synthetic resin sheet, there is used a polyethylene sheet, a polyvinyl chloride sheet, or the like. As a representative of foamed sheet, there is used a polyethylene foamed sheet, a polypropylene foamed sheet, or the like. The polyethylene sheet is economically superior to the polyvinyl chloride sheet. The polyethylene foamed sheet is also economically superior to the polypropylene foamed sheet.

The foamed laminate sheet 30 may, as shown in Fig. 1E, be produced as follows. First, cuts 33a may be formed on a synthetic resin sheet 11 intermittently in the vertical direction (in this case, a direction perpendicular to the sheet flowing direction) at a cut part 40, to thereby form a sheet 31 with cuts (see Fig. 1C). Then, the sheet 31 may be extended at an extending part 50 so as to form the meshed sheet 32 (see Fig. 1D), and further the meshed sheet 32 may be attached to the foamed sheet 12 at an attaching part 60.

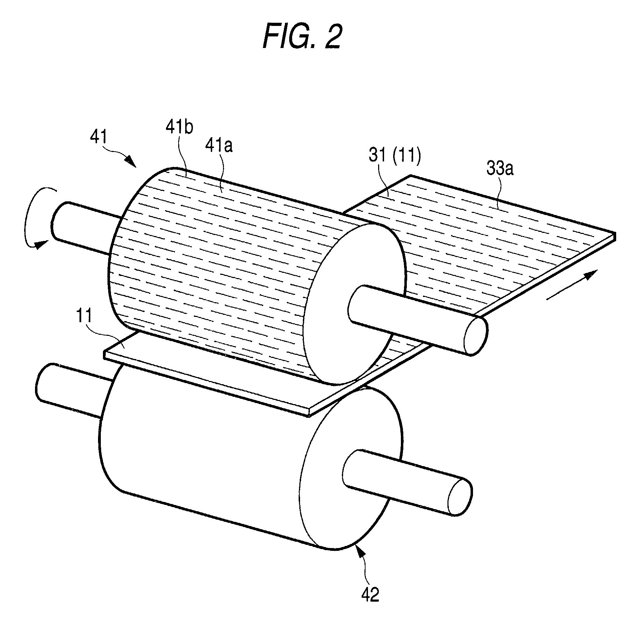

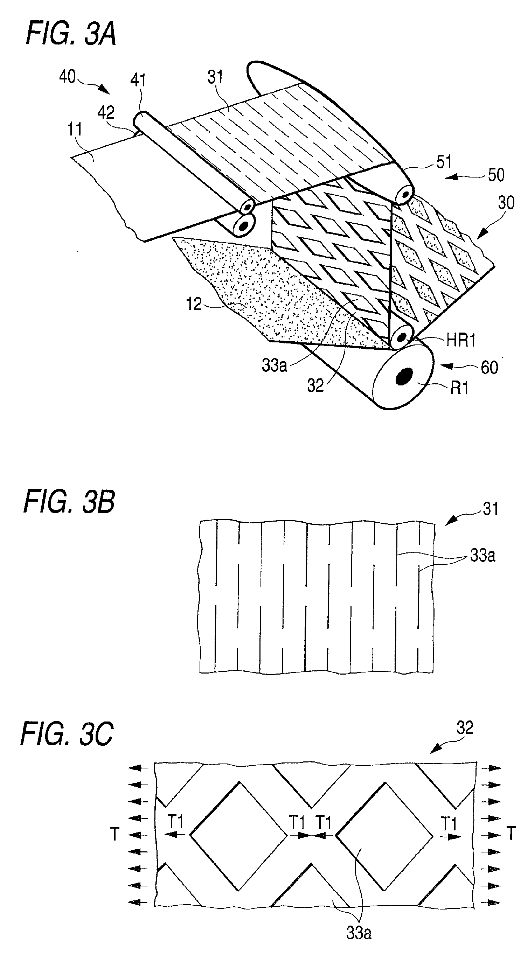

As shown in Fig. 2, the cut part 40 may include a cutter roller 41 and a receiving roller 42. The cutter roller 41 may be structured by, for example, providing blades 41b on a surface of a metallic roller 41a which correspond to the cuts 33a to be formed. The receiving roller 42 may be structured by, for example, a rubber roller. Accordingly, the cuts 33a may be formed by passing the synthetic resin sheet 11 between the cutter roller 41 and the receiving roller 42, so that the sheet 31 with cuts (see Fig. 1C and Fig. 3B) is produced. In the first embodiment of the invention, the cuts 33a are formed in a staggered pattern as shown in Fig. 1C and Fig. 3B. Of course, other materials for the rollers and differing patterns of the cuts may be used without departing from the scope of the invention.

As shown in Fig. 3A, the extending part 50 may comprise a crown-shaped roller 51. In Fig. 3A, the arrangement of the roller 51 is changed from that of Fig. 1E for explanatory purposes.

The crown roller 51 may be preferably structured with a material (for example, a metal) that provides a superior sliding property for the sheet 31 (11). For example, when the sheet 31 with, cuts as seen in Fig. 3A is wound over the crown-shaped roller 51, tension T is applied to the sheet 31 as seen in Fig. 3C. Thus, tension T1 is also applied to the cuts 33a, whereby the cuts 33a are expanded to form the meshed sheet 32.

The attaching part 60 includes the heat roller HR1 and the pressure roller R1 as well as the conventional one.

The meshed sheet 32 and the foamed sheet 12 are passed between the heat roller HR1 and the pressure roller R1 and thermally adhered to each other, whereby the foamed laminate sheet 30 is produced. Of course, other ways of adhering the meshed sheet 32 and the foamed sheet 12 may be used.

Therefore, according to the foamed laminate sheet and the producing method of the first embodiment, the following working effects are available. Specifically, the foamed laminate sheet 30 according to the first embodiment includes the meshed sheet 32 fabricated by extending the synthetic resin sheet 31 with cuts 33a formed intermittently in the vertical direction, and the foamed sheet 12 attached to the meshed sheet 32. Therefore, this sheet has air permeability and excellent development-proof.

Further, the meshed sheet is obtained by only expanding the synthetic resin sheet with cuts formed intermittently in the vertical direction. Accordingly, it is no longer necessary to cross plural pieces of synthetic resin tapes 22, 23 with each other as the prior art shown in Fig. 7. Therefore, the production process is simplified and consequently the products are available at low cost. As such, the foamed laminate sheet 30, a packaging material having air permeability and excellent development-proof may be obtained at low cost.

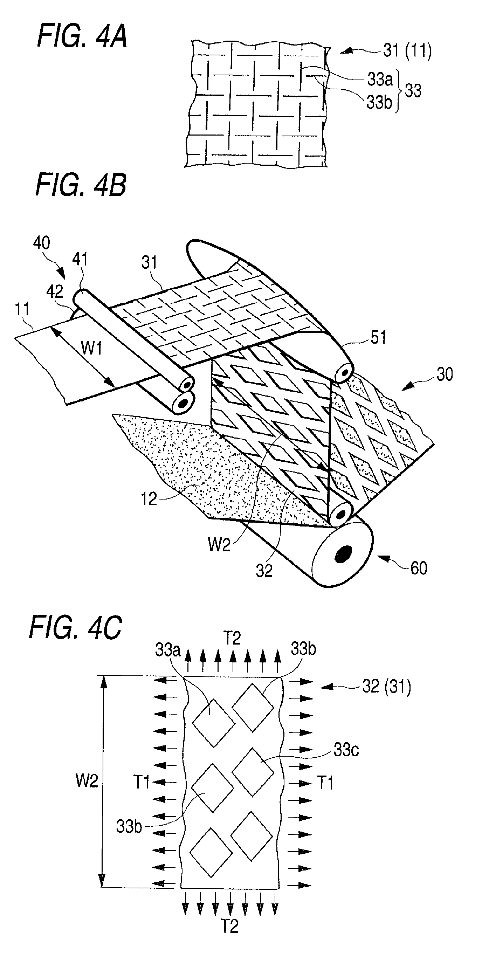

Figs. 4A to 4C are schematic views showing a foamed laminate sheet and a method for producing the foamed laminate sheet according to a second embodiment of the invention. For better understanding, Figs. 4A to 4C use the same numerals as Figs. 1A to 1E to refer to the same parts.

Referring to Fig. 4A, the second embodiment differs from the first embodiment in that the cuts 33 comprise cuts 33a in the vertical direction and cuts 33b in the lateral direction which are formed in a staggered pattern on the synthetic resin sheet 11, and other points are not changed. The cutter roller 41 is formed with the blades corresponding to the cuts 33.

When the sheet 31 with cuts 33 is wound over the crown-shaped roller 51 as shown in Fig. 4B, tension T1 in the lateral direction and tension T2 in the vertical direction are applied to the sheet 31, as seen in Fig. 4C, whereby the cuts 33 are expanded to form the meshed sheet 32.

As described above, when the cuts 33 are made in the lateral direction, the width W2 of the meshed sheet 32 is about twice of the width W1 of the synthetic resin sheet 11.

According to this embodiment, the method of producing the foamed laminate sheet 30 makes cuts 33a intermittently in the vertical direction on the synthetic resin sheet 11 to form the synthetic resin sheet 31 with cuts, extends the sheet 31 to form the meshed sheet 32, and attaches the foamed sheet 12 to the meshed sheet 32, to thereby obtain the foamed laminate sheet 30.

According to this producing method, the foamed laminate sheet 30 having air permeability and excellent development-proof may be obtained at low cost. Also, since the cuts 33a are staggeredly formed in the foamed laminate sheet 30, the development-proof is improved.

The sheet 31 with cuts may be extended by winding the sheet 31 over the crown-shaped roller, so as to obtain the meshed sheet 32 suitably and easily. As a result, the foamed laminate sheet 30 may be produced at further low cost.

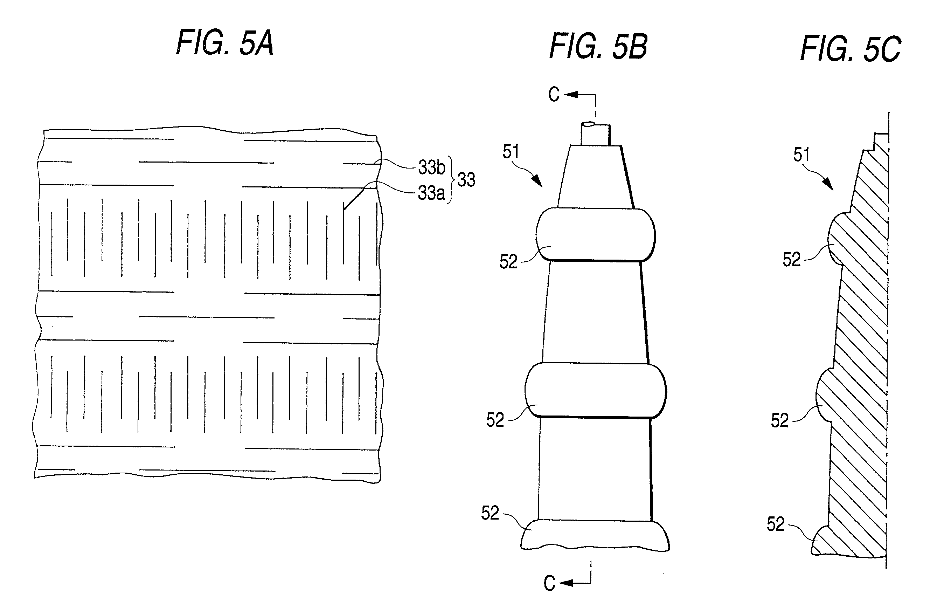

Figs. 5A to 5C are schematic views showing a foamed laminate sheet and a method for producing the foamed laminate sheet according to a third embodiment of the invention. For better understanding, Figs. 5A to 5C use the same numerals as Figs. 1A to 1E to refer to the same parts.

The third embodiment is different from the first embodiment in that, as shown in Fig. 5A, the cuts 33 having the cuts 33a in the vertical direction and cuts 33b in the lateral direction are formed in a staggered pattern on the synthetic resin sheet 11, and other points are not changed. The cutter roller 41 is formed with blades corresponding to the cuts 33.

Further, as shown in Figs. 5B and 5C, the crown-shaped roller 51 includes ring-shaped convexes 52 at positions corresponding to the cuts 33b in the lateral direction of the synthetic resin sheet 11 (the sheet flowing direction).

When the sheet 31 with cuts 33 is wound over the crown-shaped roller 51 shown in Figs. 5B and 5C, the cuts 33b in the lateral direction are suitably expanded. Also in the third embodiment, the working effects similar to those of the first embodiment are provided.

While only certain embodiments of the invention have been specifically described herein, it will apparent that numerous modifications may be made thereto without departing from the scope of the invention. As an example, intermittent cuts may be made only in the lateral direction. Further, the cuts may be made with a punch having a long hole instead of the blade.

In the above description, the sheets are referred to as having cuts in a "vertical direction" and/or a "lateral direction". These terms may be understood as meaning first and second lateral directions, respectively. In the preferred embodiments, the "vertical direction", or first lateral direction, is perpendicular to the sheet flowing direction; whilst the "lateral direction", or second lateral direction, is the same as the sheet flowing direction.

## Claims

1. A foamed laminate sheet, comprising:
a meshed sheet made of synthetic resin and having a pattern of intermittent cuts perforating the sheet in a substantially vertical direction and/or a substantially lateral direction and placed in tension; and
a foamed sheet attached to the meshed sheet.

2. A foamed laminate sheet as claimed in claim 1, wherein the pattern is a staggered pattern.

3. A method of producing a foamed laminate sheet, comprising the steps of:
forming cuts on a synthetic resin sheet, the cuts intermittently extending in a substantially vertical direction and/or a substantially lateral direction;
extending the synthetic resin sheet having the cuts, to thereby form a meshed sheet; and
attaching a foamed sheet to the meshed sheet so as to produce the foamed laminate sheet.

4. A method as claimed in claim 3, wherein the cuts are formed in a staggered pattern.

5. A method as claimed in claim 3 or 4, wherein the extending step is performed by winding the synthetic resin sheet over a crown-shaped roller.

6. A method as claimed in claim 5, wherein during the extending step, the cuts in either the substantially vertical direction or the substantially lateral direction are extended further than the cuts in the other direction by convex rings on the crown-shaped roller.

7. Apparatus for producing a foamed laminate sheet, comprising:
a cutting portion including a cutter roller with blades on a surface thereof and a receiving roller opposing the cutter roller and operable to interpose a synthetic resin sheet therebetween;
an extending portion including an extending roller for winding the synthetic resin sheet; and
an attaching portion including a heat roller and a pressure roller for attaching the synthetic resin sheet to a foamed sheet, to thereby obtain the foamed laminate sheet.

8. Apparatus as claimed in claim 7, wherein the extending roller is formed in a crown-shape.

9. Apparatus as claimed in claim 8, wherein the crown-shape roller includes convex rings.

10. Apparatus as claimed in claim 7, wherein the blades of the cutter roller are disposed intermittently and staggeredly in a substantially vertical direction and/or a substantially lateral direction.
